# FASCICULE DE BREVET EUROPEEN

(11) **EP 2 402 181 B1**
(45) Date de publication et mention de la délivrance du brevet: **12.06.2013**
(21) Numéro de dépôt: 11171092.7
(22) Date de dépôt: 22.06.2011
(51) Int. Cl.: B60G 15/06, F16C 19/10, F16C 33/76

(54) **BUTEE DE SUSPENSION COMPRENANT DEUX ELEMENTS D'ETANCHEITE**
ABGEDICHTETES AXIALWÄLZLAGER FÜR FAHRZEUGAUFHÄNGUNG
SUSPENSION STOP COMPRISING TWO SEAL ELEMENTS

(30) Priorité: 29.06.2010 FR 1002714
(43) Date de publication de la demande: 04.01.2012
(73) Titulaire: NTN-SNR Roulements, 74000 Annecy (FR)
(72) Inventeur: Saunier, Ludovic, 74540 Saint Félix (FR)
(74) Mandataire: Sayettat, Julien Christian

(56) Documents cités:
- WO-A2-2009/019340
- US-A- 2 759 778

## Description

L'invention concerne une butée de suspension de véhicule automobile, notamment destinée à être intégrée dans une jambe de suspension télescopique d'une roue directrice de véhicule automobile.

L'invention s'applique à une butée de suspension comprenant une coupelle supérieure fixe destinée à être associée à la caisse du véhicule, une coupelle inférieure tournante comportant un appui pour le ressort de suspension et des corps roulants disposés entre lesdites coupelles pour permettre leur rotation relative.

Pour empêcher d'une part les fuites du lubrifiant présent dans l'espace de roulement et, d'autre part la contamination dudit espace avec des polluants extérieurs, on connaît l'utilisation de joints d'étanchéité comprenant un élément d'étanchéité souple qui est fixé ou intégré à l'une des coupelles pour être en contact frottant sur l'autre coupelle.

Cette réalisation présente notamment l'inconvénient d'induire un couple de frottement lors de la rotation relative des coupelles, ce qui est préjudiciable pour l'utilisation de la butée dans le montage d'une roue directrice.

Pour résoudre ce problème, le document WO-2009/019340 propose un élément d'étanchéité disposé en contact frottant sur chacune des coupelles, ledit élément d'étanchéité étant monté mobile par rapport à au moins une coupelle. On obtient ainsi un compromis particulièrement satisfaisant entre la fonction étanchéité et le couple induit, et ce même en cas de déformation de la butée sous l'effet des efforts subis.

Toutefois, lorsque l'élément d'étanchéité est mobile radialement, cette réalisation prévoit la formation d'une gorge radiale dans une coupelle, ce qui complexifie la réalisation de ladite coupelle notamment en nécessitant l'utilisation d'un organe mobile lors du moulage de ladite coupelle.

En outre, le montage mobile de l'élément d'étanchéité dans la gorge contraint la réalisation dudit élément, notamment en nécessitant qu'il soit repliable ou déformable.

L'invention vise à perfectionner l'art antérieur en proposant notamment une butée de suspension étanche qui soit plus simple à réaliser et à monter, et ce tout en conservant un compromis optimal entre la fonction étanchéité et le couple induit.

A cet effet, l'invention propose une butée de suspension de véhicule automobile, ladite butée comprenant une coupelle supérieure, une coupelle inférieure et des corps roulants disposés entre lesdites coupelles pour permettre leur rotation relative, lesdites coupelles étant agencées pour former entre elles au moins un espace annulaire qui est délimité latéralement par deux parois axiales respectivement intérieure et extérieure, ladite butée comprenant un ensemble d'au moins deux anneaux d'étanchéité rapportés qui sont empilés axialement dans ledit espace en présentant un jeu axial, lesdits anneaux étant montés sur la paroi intérieure - respectivement extérieure - et formant un jeu radial avec la paroi extérieure - respectivement intérieure -, de sorte à former une chicane d'étanchéité dans ledit espace.

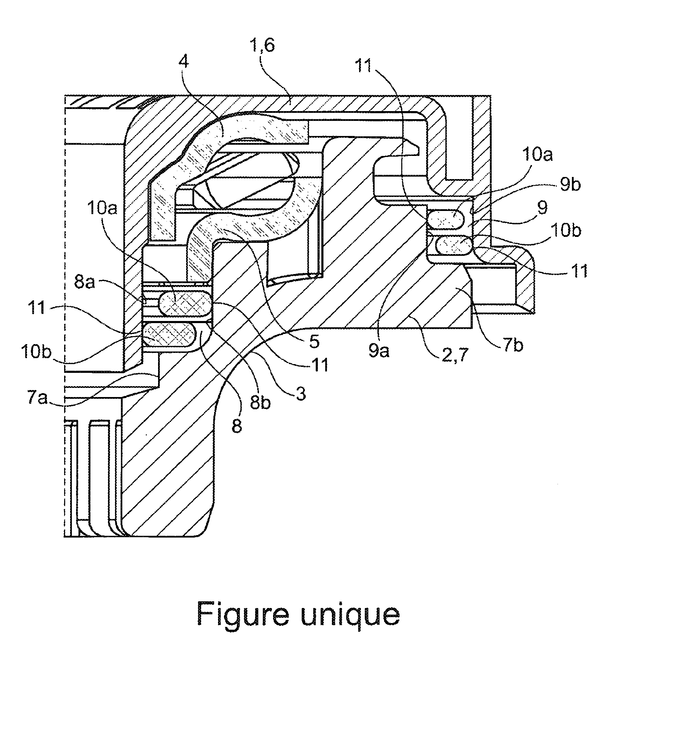

D'autres particularités et avantages de l'invention apparaîtront dans la description qui suit, faite en référence à la figure jointe qui représente de façon partielle et en coupe axiale une butée de suspension selon un mode de réalisation de l'invention.

Dans cette description, les termes de positionnement dans l'espace sont pris en référence à l'axe de rotation de la butée de suspension (vertical sur la figure qui montre un côté de la coupe, l'autre côté étant symétrique par rapport audit axe). En particulier, le terme « intérieur » est relatif à une disposition proche de cet axe et le terme « extérieur » est relatif à une disposition à distance de cet axe. Par ailleurs, les termes « supérieur » et « inférieur » sont relatifs à la disposition de la butée telle que représentée sur la figure.

Une roue d'un véhicule automobile, notamment une roue directrice, est montée sur le châssis par l'intermédiaire d'une jambe de force qui permet la suspension de la caisse relativement au sol. A cet effet, la jambe de force comprend classiquement un amortisseur, un ressort de suspension ainsi qu'une butée de suspension sur laquelle le ressort vient en appui.

En relation avec la figure, on décrit ci-dessous un mode de réalisation d'une butée de suspension qui comprend une coupelle supérieure fixe 1 destinée à être associée à la caisse du véhicule, une coupelle inférieure tournante 2 comportant un appui 3 pour le ressort de suspension et des corps roulants (non représentés) disposés entre lesdites coupelles pour permettre leur rotation relative autour d'un axe. Ainsi, lorsque le ressort est sollicité en compression et en détente, l'enroulement des spires de ce dernier sur elles-mêmes est modifié, ce qui entraîne la rotation de la coupelle inférieure 2. En outre, le braquage des roues induit également une rotation de la coupelle inférieure 2.

Dans le mode de réalisation représenté, les coupelles supérieure 1 et inférieure 2 comprennent chacune une rondelle 4, 5, notamment réalisée en tôle emboutie, qui est pourvue d'une piste de roulement respectivement inférieure et supérieure pour les corps roulants.

La butée comprend en outre deux pièces d'habillage 6, 7, notamment réalisées par moulage d'un matériau thermoplastique rigide, par exemple de type polyamide 6.6. Ces pièces sont respectivement un couvercle 6 associé sur la rondelle supérieure 4 pour être interposé entre le châssis et ladite rondelle supérieure, et un support 7 associé sous la rondelle inférieure 5, ledit support comprenant l'appui ressort 3. Ces pièces d'habillage 6, 7 permettent notamment une reprise des efforts du ressort et éventuellement de ceux de la butée de choc.

Dans le mode de réalisation représenté, le support 7 est entouré par le couvercle 6 de sorte à former deux espaces annulaires respectivement intérieur 8 et extérieur 9. Chacun des espaces annulaires 8, 9 est délimité latéralement par deux parois axiales respectivement intérieure 8a, 9a et extérieure 8b, 9b, les parois intérieure 8a et extérieure 8b de l'espace annulaire intérieur 8 étant formées sur respectivement le couvercle 6 et le support 7, les parois intérieure 9a et extérieure 9b de l'espace annulaire extérieur 9 étant formées sur respectivement le support 7 et le couvercle 6. En particulier, les espaces annulaires 8, 9 présentent un jeu radial de sorte à permettre la rotation du support 7 par rapport au couvercle 6 sans interférence entre ceux-ci.

La butée de suspension comprend un ensemble d'au moins deux anneaux d'étanchéité 10 rapportés qui sont empilés axialement dans un espace annulaire 8, 9 en présentant un jeu axial. En particulier, les anneaux d'étanchéité 10 peuvent être réalisés, notamment par moulage, en matériau polymérique rigide tel que le polyéthylène, le polypropylène, le polyamide 6, 6.6, 11 ou 12, le polyoxyméthylène (POM).

Dans le mode de réalisation représenté, les deux espaces annulaires 8, 9 sont équipés d'un ensemble de deux anneaux d'étanchéité 10 de sorte à étanchéifier les deux côtés de la butée de suspension. Toutefois, on peut prévoir qu'un seul espace annulaire, intérieur 8 ou extérieur 9, soit équipé d'un ensemble d'anneaux d'étanchéité 10, l'autre pouvant être équipé d'un dispositif d'étanchéité connu de l'art antérieur.

Les anneaux d'étanchéité 10 sont montés sur la paroi intérieure 8a, 9a - respectivement extérieure 8b, 9b - et forment un jeu radial avec la paroi extérieure 8b, 9b - respectivement intérieure 8a, 9a -, de sorte à former une chicane d'étanchéité dans l'espace annulaire 8, 9. En particulier, une chicane rapportée sur la butée permet de ne pas contraindre la réalisation du couvercle 6 et/ou du support 7, notamment en ne nécessitant pas l'utilisation d'un organe mobile pour la formation d'une gorge radiale.

Dans un exemple de réalisation, le jeu axial entre les anneaux d'étanchéité 10 d'un ensemble peut être compris entre 1,2 et 2,4 mm et le recouvrement radial entre lesdits anneaux peut être compris entre 0,8 et 1,6 mm.

Dans le mode de réalisation représenté, les anneaux supérieurs 10a sont emmanchés sur le support 7 et les anneaux inférieurs 10b sont emmanchés sur le couvercle 6. En variante non représentée, un ensemble peut comprendre un empilement de plus de deux anneaux d'étanchéité 10, lesdits anneaux étant montés de façon alternée sur les parois axiales 8a, 8b ; 9a, 9b de sorte à augmenter la sinuosité de la chicane formée.

De façon avantageuse, au moins un anneau d'étanchéité 10 est monté sur la paroi axiale 8a, 8b ; 9a, 9b avec possibilité de déplacement axial. En particulier, les deux anneaux d'étanchéité 10 peuvent se déplacer axialement sur leur paroi de montage respective, notamment sous l'effet des déformations du couvercle 6 relativement au support 7 qui sont induites par les sollicitations mécaniques que la butée de suspension a à subir dans le cadre de son utilisation.

Ainsi, il est possible de combiner la fonction d'étanchéité procurée par la chicane à la limitation du couple du fait de la possibilité de déplacement des anneaux d'étanchéité 10 par rapport à au moins une coupelle 1, 2. En outre, les déplacements des anneaux d'étanchéité 10 limitent leur usure et évitent le risque qu'ils se coincent lors des déformations de la butée.

Dans le mode de réalisation représenté, chaque anneau 10 présente une portée d'emmanchement 11 sur la paroi axiale 8a, 8b ; 9a, 9b, le diamètre de ladite portée étant sensiblement égal à celui de ladite paroi de sorte à permettre un glissement axial de ladite portée sur ladite paroi.

En outre, le support 7 présente deux extensions 7a, 7b qui s'étendent radialement sous respectivement un espace annulaire 8, 9 de sorte à maintenir l'ensemble d'anneaux d'étanchéité 10 à l'intérieur dudit espace. Outre leur fonction de butée axiale pour les anneaux d'étanchéité 10, chaque extension 7a, 7b est disposée en regard du couvercle 6 avec un jeu réduit pour limiter l'accès des polluants dans chacun des espaces annulaires 8, 9. En variante non représentée, au moins une extension peut être formée sur le couvercle 6 pour maintenir l'ensemble d'anneaux d'étanchéité 10 et/ou pour former un jeu réduit avec le support 7.

Par ailleurs, les portées 11 d'emmanchement présentent une géométrie biseautée afin de réduire l'interférence d'emmanchement sur la paroi axiale 8a, 8b ; 9a, 9b. Ainsi, on favorise le déplacement axial et le pivotement de l'anneau d'étanchéité 10 par rapport à sa paroi de montage 8a, 8b ; 9a, 9b.

Le montage de la butée représentée est réalisé en empilant les anneaux 10 d'un ensemble sur le support 7, les portées 11 des anneaux supérieurs 10a étant emmanchées sur les parois axiales 8b, 9a dudit support. Ensuite, le couvercle 6 est monté sur le support 7 en assurant l'emmanchement des portées 11 des anneaux inférieurs 10b sur les parois axiales 8a, 9b dudit couvercle. En particulier, les emmanchements réalisés ne nécessitent pas un étirement des anneaux d'étanchéité 10 de sorte à ne pas limiter le choix du matériau formant lesdits anneaux.

Dans cette réalisation, le diamètre des anneaux d'étanchéité 10 d'un ensemble étant très proche, on peut prévoir un moyen visuel de détrompage, par exemple que les anneaux 10 d'un ensemble ne soient pas de la même couleur et/ou présentent une inscription suivant qu'ils soient supérieur 10a ou inférieur 10b. Ainsi, on rend différentiables les anneaux d'étanchéité 10 de sorte à limiter la possibilité de les intervertir lors de leur montage sur le support 7.

## Revendications

1. Butée de suspension de véhicule automobile, ladite butée comprenant une coupelle supérieure (1), une coupelle inférieure (2) et des corps roulants disposés entre lesdites coupelles pour permettre leur rotation relative, lesdites coupelles étant agencées pour former entre elles au moins un espace annulaire (8, 9) qui est délimité latéralement par deux parois axiales respectivement intérieure (8a, 9a) et extérieure (8b, 9b), ladite butée étant **caractérisée en ce qu'**elle comprend un ensemble d'au moins deux anneaux d'étanchéité (10) rapportés qui sont empilés axialement dans ledit espace en présentant un jeu axial, lesdits anneaux étant montés sur la paroi intérieure (8a, 9a) - respectivement extérieure (8b, 9b) - et formant un jeu radial avec la paroi extérieure (8b, 9b) - respectivement intérieure (8a, 9a) -, de sorte à former une chicane d'étanchéité dans ledit espace.

2. Butée de suspension selon la revendication 1, **caractérisée en ce qu'**au moins un anneau d'étanchéité (10) est monté sur la paroi axiale (8a, 8b ; 9a, 9b) avec possibilité de déplacement axial.

3. Butée de suspension selon la revendication 2, **caractérisée en ce que** l'anneau d'étanchéité (10) présente une portée d'emmanchement (11) sur la paroi axiale (8a, 8b ; 9a, 9b), le diamètre de ladite portée étant sensiblement égal à celui de ladite paroi de sorte à permettre un glissement axial de ladite portée sur ladite paroi.

4. Butée de suspension selon la revendication 3, **caractérisée en ce que** la portée d'emmanchement (11) présente une géométrie biseautée afin de réduire l'interférence d'emmanchement sur la paroi axiale (8a, 8b ; 9a, 9b).

5. Butée de suspension selon l'une quelconque des revendications 1 à 4, **caractérisée en ce qu'**au moins une coupelle (1, 2) présente une extension (7a, 7b) qui s'étend radialement sous l'espace annulaire (8, 9) de sorte à maintenir l'ensemble d'anneaux d'étanchéité (10) à l'intérieur dudit espace.

6. Butée de suspension selon la revendication 5, **caractérisé en ce que** l'extension (7a, 7b) est disposée en regard de l'autre coupelle (2, 1) avec un jeu réduit pour limiter l'accès des polluants dans l'espace annulaire (8, 9).

7. Butée de suspension selon l'une quelconque des revendications 1 à 6, **caractérisée en ce qu'**elle présente deux espaces annulaires respectivement intérieur (8) et extérieur (9), chacun desdits espaces étant équipé d'un ensemble d'anneaux d'étanchéité (10).

8. Butée de suspension selon l'une quelconque des revendications 1 à 7, **caractérisée en ce que** les anneaux (10) d'un ensemble comprennent un moyen visuel de détrompage.

9. Butée de suspension selon l'une quelconque des revendications 1 à 8, **caractérisée en ce que** les coupelles supérieure (1) et inférieure (2) comprennent chacune une rondelle (4, 5) qui est pourvue d'une piste de roulement respectivement inférieure et supérieure pour les corps roulants, ladite butée comprenant en outre deux pièces d'habillage, respectivement un couvercle (6) associé sur la rondelle supérieure (4) et un support (7) associé sous la rondelle inférieure (5), l'espace annulaire (8, 9) étant prévu entre ledit couvercle et ledit support.

10. Butée de suspension selon l'une quelconque des revendications 1 à 9, **caractérisée en ce que** les anneaux d'étanchéité (10) sont réalisés en matériau polymérique rigide.

## Patentansprüche

1. Drucklager für die Radaufhängung eines Kraftfahrzeugs, wobei das besagte Lager einen oberen Federteller (1), einen unteren Federteller (2) und Wälzkörper umfasst, die zwischen den besagten Federtellern angeordnet sind, um sich jeweils drehen zu können, und die besagten Federteller angeordnet sind, um zwischen sich zumindest einen Ringraum (8, 9) zu bilden, der seitlich von zwei jeweils inneren (8a, 9a) und äußeren (8b, 9b) axialen Wänden eingegrenzt ist, und das besagte Lager **dadurch gekennzeichnet ist, dass** es eine Einheit von zumindest zwei beigebrachten Dichtringen (10) umfasst, die im besagten Raum axial übereinandergelegt sind, und ein axiales Spiel aufweisen, und die besagten Ringe auf der inneren Wand (8a, 9a) - bzw. äußeren Wand (8b, 9b) - montiert sind, und ein radiales Spiel mit der äußeren Wand (8b, 9b) - bzw. inneren Wand (8a, 9a) bilden, um im besagten Raum eine Dichtschikane zu bilden.

2. Radaufhängungsdrucklager nach Anspruch 1, **dadurch gekennzeichnet dass** zumindest ein Dichtring (10) mit der Möglichkeit zu einer axialen Bewegung auf der axialen Wand (8a, 9a; 8b, 9b) montiert wird.

3. Radaufhängungsdrucklager nach Anspruch 2, **dadurch gekennzeichnet dass** der Dichtring (10) eine Pressauflage (11) auf der axialen Wand (8a, 9a; 8b, 9b) aufweist, und der Durchmesser der besagten Auflage in etwa gleich jenem der besagten Wand ist, um eine axiale Gleitbewegung der besagten Auflage auf der besagten Wand zu ermöglichen.

4. Radaufhängungsdrucklager nach Anspruch 3, **dadurch gekennzeichnet dass** die Pressauflage (11) eine abgeschrägte Geometrie aufweist, um die Press-Störkontur auf der axialen Wand (8a, 9a; 8b, 9b) zu verringern.

5. Radaufhängungsdrucklager nach irgendeinem der Ansprüche 1 bis 4, **dadurch gekennzeichnet dass** zumindest ein Federteller (1, 2) eine Erweiterung (7a, 7b) aufweist, die sich radial unter dem Ringraum (8, 9) erstreckt, sodass die Einheit der Dichtringe (10) im Inneren des besagten Raumes gehalten wird.

6. Radaufhängungsdrucklager nach Anspruch 5, **dadurch gekennzeichnet dass** die Erweiterung (7a, 7b) mit einem geringeren Spiel gegenüber dem anderen Federteller (2, 1) angeordnet ist, um das Eindringen von Verschmutzungen in den Ringraum (8, 9) einzuschränken.

7. Radaufhängungsdrucklager nach irgendeinem der Ansprüche 1 bis 6, **dadurch gekennzeichnet dass** es zwei jeweils innere (8) und äußere (9) Ringräume aufweist, und jeder der besagten Räume mit einer Einheit an Dichtringen (10) ausgestattet ist.

8. Radaufhängungsdrucklager nach irgendeinem der Ansprüche 1 bis 7, **dadurch gekennzeichnet, dass** die Ringe (10) einer Einheit eine optische Vertauschsicherung umfassen.

9. Radaufhängungsdrucklager nach irgendeinem der Ansprüche 1 bis 8, **dadurch gekennzeichnet, dass** die oberen (1) und die unteren (2) Federteller jeweils eine Scheibe (4, 5) umfassen, die mit einer jeweils oberen und unteren Wälzfläche für die Wälzkörper versehen sind, und das besagte Lager darüber hinaus zwei Verkleidungsteile, bzw. einen Deckel (6) umfasst, der der oberen Scheibe (4) zugeordnet ist, und eine Halterung (7), die der unteren Scheibe (5) zugeordnet ist, wobei der Ringraum (8, 9) zwischen dem besagten Deckel und der besagten Halterung vorgesehen ist.

10. Radaufhängungsdrucklager nach irgendeinem der Ansprüche 1 bis 9, **dadurch gekennzeichnet, dass** die Dichtringe (10) aus einem steifen Polymerwerkstoff gefertigt sind.

## Claims

1. Motor vehicle bump stop, said stop comprising an upper retainer (1), a lower retainer (2) and rolling bodies arranged between said retainers to enable the relative rotation thereof, said retainers being arranged to form together at least one annular space (8, 9) defined laterally by two respectively inner (8a, 9a) and outer (8b, 9b) axial walls, said stop being **characterised in that** it comprises a set of at least two mounted seal rings (10) stacked axially in said space with an axial clearance, said rings being mounted on the inner (8a, 9a) - or outer (8b, 9b) - wall and forming a radial clearance with the outer (8b, 9b) - or inner (8a, 9a) - wall, so as to form a sealing baffle in said space.

2. Bump stop according to claim 1, **characterised in that** at least one seal ring (10) is mounted on the axial wall (8a, 8b; 9a, 9b) with the option of axial movement.

3. Bump stop according to claim 2, **characterised in that** the seal ring (10) has a jointing surface (11) on the axial wall (8a, 8b; 9a, 9b), the diameter of said surface being substantially equal to that of said wall so as to enable axial sliding of said surface on said wall.

4. Bump stop according to claim 3, **characterised in that** the jointing surface (11) has a bevelled geometry to reduce jointing interference on the axial wall (8a, 8b; 9a, 9b).

5. Bump stop according to any of claims 1 to 4, **characterised in that** at least one retainer (1, 2) has an extension (7a, 7b) extending under the annular space (8, 9) so as to hold the set of seal rings (10) inside said space.

6. Bump stop according to claim 5, **characterised in that** the extension (7a, 7b) is arranged opposite the other retainer (2, 1) with reduced clearance to limit the access of pollutants into the annular space (8, 9).

7. Bump stop according to any of claims 1 to 6, **characterised in that** it has two inner (8) and outer (9) annular spaces, respectively, each of said spaces being equipped with a set of seal rings (10).

8. Bump stop according to any of claims 1 to 7, **characterised in that** the rings (10) of one set comprise visual keyway means.

9. Bump stop according to any of claims 1 to 8, **characterised in that** the upper (1) and lower (2) retainers each comprise a washer (4, 5) provided with a respectively lower and upper bearing for the rolling bodies, said stop further comprising two lining parts, an associated cover (6) on the upper washer (4) and an associated supporting member (7) under the lower washer (5), the annular space (8, 9) being provided between said cover and said supporting member.

10. Bump stop according to any of claims 1 to 9, **characterised in that** the seal rings (10) are made of rigid polymeric material.
